# EUROPEAN PATENT SPECIFICATION

(11) **EP 0 609 808 B1**
(45) Date of publication and mention of the grant of the patent: **22.04.1998**
(21) Application number: 94101396.3
(22) Date of filing: 31.01.1994
(51) Int. Cl.: D21H 23/64, D21H 19/20, D21H 25/06, C09J 129/04, C09J 7/04

(54) **Thermo-adhesive, water-soluble or water-decomposable paper and method of manufacturing the same**
Wärmeempfindlich klebendes, wasserlösliches oder wasserdispergierbares Papier, und Verfahren zu seiner Herstellung
Papier thermoadhésif, soluble ou décomposable dans l'eau, et son procédé de fabrication

(30) Priority: 02.02.1993 JP 39474/93
(43) Date of publication of application: 10.08.1994
(73) Proprietor: TOKAI PULP Co., Ltd., Shizuoka-ken (JP); UNITIKA LTD., Amagasaki-shi Hyogo (JP)
(72) Inventor: Kawamura, Shunichi, Fujieda-shi, Shizuoka-ken (JP); Kinoshita, Yasutada, Akou-shi, Hyogo-ken (JP); Araki, Takashi, Toyonaka-shi, Osaka-fu (JP); Horiuchi, Morio, Aioi-shi, Hyogo-ken (JP); Oki, Yasuchika, Uji-shi, Kyoto-fu (JP); Nishinaka, Yoshiki, Akou-shi, Hyogo-ken (JP)
(74) Representative: Vonnemann, Gerhard, Dr.-Ing.

(56) References cited:
- US-A- 2 681 637
- DATABASE WPI Section Ch, Week 7646, Derwent Publications Ltd., London, GB; Class A81, AN 76-85586X & JP-A-51 106 140 (UNITIKA KK) 21 September 1976
- DATABASE WPI Section Ch, Week 8738, Derwent Publications Ltd., London, GB; Class A97, AN 87-266843 & JP-A-62 184 193 (EARTH SEIYAKU KK) 12 August 1987
- DATABASE WPI Section Ch, Week 9016, Derwent Publications Ltd., London, GB; Class A97, AN 90-119137 & JP-A-2 068 397 (KURARAY KK) 7 March 1990
- DATABASE PAPERCHEM THE INSTITUTE OF PAPER SCIENCE AND TECHNOLOGY, ATLANTA, GA, US AN 41-02255 PRACHAR, M. 'USE OF POLYVINYL ALCOHOL IN THE PAPER INDUSTRY' & PAPIR CELULOZA vol. 24, no. 2 , February 1969 pages 51 - 54

## Description

### FIELD OF THE INVENTION

This invention relates to a water-soluble or water-decomposable paper having heat-sensitive adhesion property and soluble in water or maceratable into a bulk filament or fiber form in short time, and a method of manufacturing the same.

### BACKGROUND OF THE INVENTION

Film and/or paper of the type having heat-sensitive adhesion property and soluble or decomposable in water is proposed in Japanese Patent Application Laid-Open No. 51-106183, Japanese Patent Publication No. 58-25710, and Japanese Patent Application Laid-Open No. 4-151243. Paper of the type having no heat-sensitive adhesiveness but having water decomposability is proposed in Japanese Patent Application Laid-Open Nos. 63-264998 and 2-68397.

JP-B-58-25710 discloses a heat-sensitive adhesive paper coated on ist surface with a hot-melt and water-soluble adhesive composed mainly of polyvinyl alcohol.

This heat-sensitive adhesive paper is imparted with water-decomposability just to be easily recycable when it becomes wastepaper after use. Some powerful beater is needed to beat the wastepaper to be decomposed in water. The paper can be coated by one of the following processes:

applying the hot-melt adhesive; applying the water solution of the adhesive onto the paper surface; and immersing the paper in the water solution of the adhesive.

JP-A-62-184193 describes a water dis-integratable non woven fabric for tissues which is partially covered with water-insoluble resin. The method of applying the resin is sprinkling, spraying, applying powder or pastedot or the like.

In US-A-2,681,637 is described a method, wherein a sheet material is applied with fine particles onto surfaces thereof and then undergoes a heat melting process so that the particles are firmly adhered to the sheet material.

Films having water solubility and heat-sensitive adhesiveness, water-soluble papers, and water-decomposable papers are used in applications such as seed band, pharmaceutical bag, and label. Other applications include, for example, laundry bag for the films, and various kinds of wipers for the papers. Most of these applications concern uses as bags and the like. Therefore, wherever the film or paper has heat-sensitive adhesiveness, it can be easily manufactured into bags, and this enables easy automation of the manufacturing process.

In the case of film, while some stiffness is required of the film, a water-soluble film having heat-sensitive adhesiveness lacks stiffness because of plasticizer mixing and/or thickness adjustment as required for enabling the film to have both hot melt property and water solubility. Therefore, such a film has a drawback that it is not well workable in the stage of processing. Another drawback is that possibly because of the effect of the the plasticizer, the film itself is likely to be largely influenced by the atmospheric temperature and humidity to become subject to blocking. This often leads to the trouble that when bags have been stored in stack, one over another, they come into adhesion with each other. Further, when an object is placed in a bag, the bag is likely to be influenced by the moisture content, moisture absorption, and temperature of the object. Therefore, good maintenance care is required in storing such bags, especially where high temperature and humidity conditions are involved. Another problem is that in the case of film-made bags, when it is necessary to put the bag into water, if air is present in the bag, the bag will not be settled in the water but will float to the surface, some time being thus required to allow water permeation.

### SUMMARY OF THE INVENTION

The object of the invention is to provide a water-soluble or water-decomposable paper having heat-sensitive adhesiveness on one side thereof and capable of being dissolved in water or easily macerated therein in the form of bulk filaments or fibers within a short time period at ordinary temperature or room temperature on the order of not higher than 30°C, and a method of manufacturing the same.

In order to accomplish this object, it is only required that heat-sensitive adhesion property is imparted to a water-soluble paper or water-decomposable paper thereby to produce a paper having both water solubility or water decomposability and heat-sensitive adhesiveness. However, when a treatment for imparting heat-sensitive adhesiveness is applied to the water-soluble paper or water-decomposable paper according to the method proposed in JP-B-58-25710, the paper has heat sensitive adhesiveness actually imparted thereto, but its water solubility or water decomposability is considerably deteriorated, because the treatment is of the hot-melt type using an elevated temperature. Therefore, in order that the paper may be dissolved in water or macerated in the form of bulk filaments or fibers, it is necessary to employ a beater or allow for a long time period. As such, it is not possible to obtain a paper having the desired heat-sensitive adhesiveness and yet capable of being readily dissolved in water or macerated into bulk filaments or fibers in short time.

It may be conceivable to use a method such that a water-soluble resin powder having heat-sensitive adhesiveness is dissolved in a solvent and the resulting solution is coated on a water-soluble paper or water-decomposable paper, the coating being then dried. With such a wet method, however, it is not possible to obtain a paper having the target characteristics. The reason is that since the object for such treatment is paper, the solution permeates the paper on both sides to reduce the strength of the paper; and the heat involved during the drying stage accelerates resin crystallization, with the result that the water solubility or water decomposability of the paper is reduced.

Further, it may be conceivable to laminate a water-soluble or water-decomposable paper and a thermo-adhesive film together. However, this approach is not practicable from the standpoint of costs.

The present inventors made further studies to reach the idea that a heat-sensitive, water-soluble resin powder is sprayed onto one side of a paper and the resulting coat is fixed by heat treatment at a temperature higher than the melting point of the resin to some extent. This invention has been developed on the basis of this idea.

Accordingly, the invention presents:
( 1 ) A thermo-adhesive, water-soluble or water-decomposable paper characterized in that one side of the paper has heat-sensitive adhesiveness in a portion thereof or all over of more than 4,8 N but less than 15,0 N, and when the paper of 2 x 2 cm in size is placed in 200 ml of 20°C water contained in a 300 ml vessel while said water being stirred with a magnetic stirrer of 250 rpm, it takes not less than 40 and not more than 58 seconds until said paper piece gets dissolved or disintegrated into single unit fibers.
( 2 ) A method of manufacturing a thermo-adhesive, watersoluble or water-decomposable paper, which comprises spraying a water-soluble and thermo-adhesive resin powder having a particle size of 2 mm (10 mesh) or finer onto one side of a watersoluble or water-decomposable paper in the amount of 5 to 50 g/m²; subsequently effecting heat treatment, preferably by hot pressing at a temperature of not higher than 30°C above the melting point of the resin, thereby fixing the resin powder to the paper.
( 3 ) A thermo-adhesive, water-soluble or water-decomposable paper as described in claim 7.

### DETAILED DESCRIPTION OF THE INVENTION

The thermo-adhesive, water-soluble or water-decomposable paper according to the invention has heat-sensitive adhesiveness on one side thereof in part or all over and, therefore, can be made into a bag simply by placing one sheet of the paper over another and heat-treating their edges. This permits easy bag making in short time and easy automation of the bag making process.

The fact that the paper as a whole is soluble in water or maceratable into bulk filaments or fibers in water in short time facilitates the process of waste disposal after the paper has been used in the form of a bag or in any other useful form.

In case that only a portion of one side of the paper has heat-sensitive adhesiveness, it is required that that portion must cover a thermo-adhesive surface area corresponding to at least the edge portions to be subjected to adhesion.

Nextly, the method of manufacturing a thermo-adhesive, water-soluble or water-decomposable paper in accordance with the invention will be explained in detail.

In the present invention, in order to produce the desired thermo-adhesive, water-soluble or water-decomposable paper, it is necessary to use, as a base paper, a water-soluble paper which can be dissolved in water in short time or a water-decomposable paper which can be macerated in water into a bulk filament or fiber form in short time.

For the base paper, insofar as it has the above noted characteristics, there is no particular limitation as to its material and basis weight. As a specific example of water-soluble paper for use as the base paper may be mentioned Na-salt type carboxymethyl cellulose paper. Examples of water-decomposable paper include pulp paper; pulp paper in which is used as a sizing agent a partially saponified polyvinyl alcohol, a modified product thereof, or methyl cellulose or a modified product thereof; rayon paper; and a pulp-rayon mixture paper in which is used as a binder a fiber produced from a partially saponified polyvinyl alcohol or from a modified product thereof. When processability is considered, the basis weight of the base paper is preferably 10 g/m² or more.

According to the invention, a water-soluble and thermo-adhesive resin powder having a particle size of 2 mm (10 mesh) or finer is sprayed onto one side of the base paper in the amount of 5 to 50 g/m²; then heat treatment is carried out at a temperature of not higher than 30 °C above the melting point of the resin, thereby to fix the resin powder to the paper, so that a target thermo-adhesive, water-soluble or water-decomposable paper is obtained.

For the thermo-adhesive and water-soluble resin mentioned above, such resins as, polyvinyl alcohol resins or modified resins thereof may be used.
Polyvinyl alcohol resins, in their history of more than 40 years since they were first produced, have been found to be of no toxic effect upon human body, and are ideally suited for use in producing thermo-adhesive, water-soluble or water-decomposable papers which may be used in applications, such as disposable items, as well.

Polyvinyl alcohol resins useful in the practice of the invention include those of the type which features adjusted degrees of polymerization and of saponification, various modified types, copolymerized types, and mixtures of these different types. Any of these type may be suitably used insofar as it is soluble in water at ordinary or room temperature on the order of not higher than 30 °C and has a heat-sensitive adhesion property. Generally, some of these types of resins are not suitable for use in film production; but according to the invention, even such type of resin may be used without involving any problem, because resin powder is fixed to the base paper by fusion bonding or heat pressing. Resins of the type having adjusted polymerization and saponification degrees are available at low cost and generally preferred for use. In this case, a polymerization degree of 50 to 500 is preferred. If the polymerization degree is more than 500, the heat-sensitive adhesion property will be lost, whereas if the polymerization degree is less than 50, the thermal stability is deteriorated. Preferably, the degree of saponification is 50 to 90 mol %, especially preferably, 65 to 80 mol. As the degree of saponification becomes higher, the heat-sensitive adhesivity is lowered, and as saponification degree becomes lower, the water solubility is lowered.

The resin powder to be sprayed on the base paper is of a particle size of 2 mm (10 mesh) or finer, and from the standpoint of uniform spraying or rolling convenience, a particle size of 0,30 mm (50 mesh) or finer is especially preferred. However, if the particle size of the resin powder is finer than 0,059 mm (250 mesh), the resin powder is likely to fly during the stage of resin powder spraying; therefore, such fine particle size is undesirable. In the present invention, the use of plasticizer is not required because the resin powder is fixed to the paper by heat treatment, such as fusion bonding or heat pressing, but a resin powder having a plasticizer mixed therein may be used. The spray amount of resin powder is preferably 5 to 50 g/m², especially preferably 8 to 20 g/m². If the spray amount is less than 5 g/m², no satisfactory adhesivity can be obtained. If the amount is more than 50 g /m², no improvement in adhesivity can be expected, and in addition an economical disadvantage entails.

For the purpose of fixing the sprayed resin powder to the paper, it is required that the heat treating temperature be not higher than 30 °C above the melting point of the resin. If the heat treating temperature is higher than 30 °C above the melting point of the resin, the water-solubility or water-decomposability of the resulting thermo-adhesive, water-soluble or water-decomposable paper will be reduced, presumably because resin crystallization is accelerated. In the case of fusion bonding, such heating device as an oven or a hot air heater is used for heat treatment. In the case of hot pressing, the heat treatment may be given at a temperature lower than the melting point of the resin; but where the temperature is less than a temperature which is 100 °C lower than the melting point of the resin, the rolling workability of the resin will be decreased. Therefore, the lower limit of temperature for such heat treatment is preferably set at 100 °C lower than the melting point of the resin. Hot pressing is carried out using hot press rollers. Hot pressing conditions, such as temperature and pressure, may be suitably selected depending upon press time. For the press working pressure, a surface pressure of 10⁶ N/m² (10 kg/cm²) may be sufficient. These processing conditions can be readily adjusted within a wide range. Through heat treatment such as fusion bonding or hot pressing the resin powder can be effectively fixed to the paper, and thus the resulting paper will have greatly improved tensile strength. Further, depending upon the sprayed amount of resin powder it is possible to obtain a product paper having a tensile strength of the order of several times as high as that of the base paper in its condition prior to processing.

The thermo-adhesive, water-soluble or water-decomposable paper according to the invention can be made into a bag simply by placing one sheet of the paper over another and heat-treating their edges. This permits easy bag making in short time and easy automation of the bag making process. Further, the fact that the paper as a whole is soluble in water or decomposable into single filaments or fibers in water in short time facilitates the process of waste disposal after the paper has been used in the form of a bag or in any other useful form.

According to the manufacturing method of the invention, such thermo-adhesive, water-soluble or water-decomposable paper having the foregoing advantages can be manufactured solely under a dry system. Since the resin powder is applied to only one side of the base paper which is required to have heat-sensitive adhesion property, it is possible to manufacture the paper of the invention at a comparatively low cost, which means good economical advantage. And the product thus obtained has amazingly improved tensile strength as compared with the base paper, and still retains the water-solubility and water-decomposability that the base paper previously had.

### EXAMPLES

In the following examples, various physical properties were measured according to the following procedures.
( i ) For tensile strength and elongation of paper, measurements were made in accordance with JIS P -8113.
(ii ) For evaluation of the water solubility and water decomposability, 200 m ℓ of water at 20 °C was put in a 300 m ℓ beaker and a sample piece of paper of 4 cm² (2 x 2 cm) was placed in the water under stirring (250 rpm) by a magnetic stirrer. Time required until the sample piece was dissolved or disintegrated in a single filament or fiber form was measured for evaluation.
(iii) For evaluation of heat-sensitive adhesivity, after sealing was effected by a heat sealer (160 °C), a peal force required for pealing a paper width of 20 mm was measured in the same way as specified in JIS P- 8113, which peal force was taken as heat-sensitive adhesivity.

### EXAMPLES 1 to 4

Onto a paper having a basis weight of 50 g/m² which was made from 40 % of H-type carboxymethyl cellulose and 60 % of pulp and then treated with an aqueous solution of NaOH was sprayed polyvinyl alcohol resin powder UMR (polymerization degree, 260; melting point, 150 °C; saponification degree, 65 mol %; particle size 0,59 mm, (pass 30 mesh); made by Unitika Chemical Co., Ltd.) all over, the resin powder spraying being made in the amount of 8 g/m² (Example 1); 13 g/m² (Example 2); and 20 g/m² (Example 3). Then, treatment by a hot press was given at a temperature of 100 °C for 0.5 seconds, with a surface pressure of 2 x 10⁶ N/m² (20 kg/cm²). Thus, thermo-adhesive, water-decomposable papers were obtained. In another example (Example 4), in place of the foregoing hot pressing, heat treatment in a hot oven at 160 °C was carried out for 45 seconds to fusion bond the sprayed resin. In other respects, same treating conditions as in Example 3 were followed. Thus, a thermo-adhesive, water-decomposable paper was obtained.

Evaluation results with respect to the obtained water-decomposable papers are shown in Table 1.

### COMPARATIVE EXAMPLES 1 and 2

Treatment was carried out in the same way as in Example 1, except that polyvinyl alcohol resin powder was sprayed in the amount of 3 g / m². Thus, a water-decomposable paper was obtained (Comparative Example 1). Also, treatment was carried out in the same way as in Example 1, except that the sprayed amount of polyvinyl alcohol resin powder was 12 g / m² and the hot press temperature was 200°C. Likewise, a water-decomposable paper was obtained (Comparative Example 2).

Evaluation results for the water-decomposable papers are also shown in Table 1.

**TABLE 1**

| | SPRAYED QUANTITY | BASIS WEIGHT | TENSILE STRENGTH | ELONGATION AT BREAK | ADHESIVITY | WATER DECOMPOSABILITY |
|---|---|---|---|---|---|---|
| | (g/m²) | (g/m²) | (N) | (%) | (N) | (sec). |
| EXAMPLE 1 | 8 | 58 | 1.7 | 2.0 | 0.48 | 40 |
| EXAMPLE 2 | 13 | 63 | 2.1 | 2.4 | 0.76 | 40 |
| EXAMPLE 3 | 20 | 70 | 2.8 | 2.9 | 1.32 | 45 |
| EXAMPLE 4 | 20 | 70 | 2.0 | 2.1 | 1.30 | 43 |
| COMP. EXAMPLE 1 | 3 | 53 | 0.9 | 1.2 | 0.13 | 40 |
| COMP. EXAMPLE 2 | 12 | 63 | 2.3 | 2.6 | 1.41 | 300 < |

### REFERENCE EXAMPLES 1 and 2

Evaluation results with respect to the base paper used in Example 1 (Reference Example 1) and HI-SELON, a thermo-adhesive and water-soluble film (made by Nippon Synthetic Chemical Industry Co., Ltd.; Reference Example 2), are shown in Table 2.

**TABLE 2**

| | SAMPLE | BASIS WEIGHT | TENSILE STRENGTH | ELONGATION AT BREAK | ADHESIVITY | WATER DECOMPOSABILITY |
|---|---|---|---|---|---|---|
| | | (g/m²) | (N) | (%) | (N) | (sec) |
| REF. EXPL. 1 | WATER DECOMPOSABLE PAPER | 51 | 11.0 | 1.2 | nil | 40 |
| REF. EXPL. 2 | HI-SELON | 50 | 9.7 | 262 | 7.3 | 42 |

As is clear from Table 1, the water-decomposable papers obtained in Examples 1 to 4 had both functions of heat-sensitive adhesiveness and water decomposability. When the water-decomposable papers, placed one over another, were allowed to stand in a highly humid condition (in an atmosphere of 30°C and RH 90 %) for 6 hours, there occurred no blocking or interpaper adhesion with the papers.

The water-decomposable papers obtained in Comparative Examples 1 and 2 had only one of the two functions, heat-sensitive adhesiveness and water-decomposability. More specifically, in Comparative Example 1, the sprayed quantity of resin powder was so small that the paper had no sufficient adhesivity or heat-sensitive adhesiveness. In Comparative Example 2, the hot pressing temperature was excessively high as compared with the melting point of the resin and, therefore, the water-decomposability was considerably affected, with the result that the paper was not dissolved in water at 20°C in short time.

The water-decomposable paper of Reference Example 1, which was not treated for heat-sensitive adhesion, had no heat-sensitive adhesiveness, though it had water-decomposability. The water-soluble film of Reference Example 2, as may be clearly seen from Table 2, had both heat-sensitive adhesiveness and water-decomposability, but when same films, placed one over another, were allowed to stand in an atmosphere of 30°C and RH 90% for 6 hours, there occurred interfilm adhesion or blocking.

### EXAMPLES 5 to 10

A water-soluble paper having a basis weight of 55 g / m² (made by Mishima Paper Co., Ltd.; MDP type) was used as a base paper, and same resin powder as used in Example 1 was sprayed onto the base paper all over, the resin powder spraying being made in the amount of 8 g / m² (Example 5); 12 g / m² (Example 6); and 20 g / m ² (Example 7). Then, hot pressing was carried out in the same way as in Example 1. Thus, a water-soluble paper having heat-sensitive adhesiveness was obtained.

A water-decomposable paper (having a basis weight of 48 g / m²) made from a mixture of rayon and pulp incorporating a polyvinyl alcohol binder fiber SMB1×3 produced by Unitika Co., Ltd. was used as a base paper, and same resin powder as used in Example 1 was sprayed onto the base paper all over, the resin powder spraying being made in the amount of 8 g / m² (Example 8); 12 g / m² (Example 9); and 20 g / m ² (Example 10). Then, hot pressing was carried out in the same way as in Example 1. Thus, a water-decomposable paper having heat-sensitive adhesiveness was obtained. Evaluation results with respect to the water-decomposable papers obtained are shown in Table 3.

### COMPARATIVE EXAMPLE 3

Treatment was carried out in the same way as in Example 10, except that a temperature of 200°C was used for hot pressing. Thus, a water-decomposable paper was obtained. Evaluation results with respect to the water-decomposable paper obtained are shown in Table 3.

**TABLE 3**

| | SPRAYED QUANTITY | BASIS WEIGHT | TENSILE STRENGTH | ELONGATION AT BREAK | ADHESIVITY | WATER DECOMPOSABILITY |
|---|---|---|---|---|---|---|
| | (g/m²) | (g/m²) | (N) | (%) | (N) | (sec) |
| EXPL. 5 | 8 | 63 | 19 | 1.7 | 5.8 | 40 |
| EXPL. 6 | 12 | 68 | 25 | 2.4 | 7.7 | 45 |
| EXPL. 7 | 20 | 75 | 26 | 2.8 | 15.0 | 43 |
| EXPL. 8 | 8 | 56 | 44 | 7.5 | 6.2 | 50 |
| EXPL. 9 | 12 | 60 | 43 | 8.4 | 8.8 | 47 |
| EXPL. 10 | 20 | 68 | 45 | 9.2 | 9.0 | 58 |
| COMP. EXPL. 3 | 20 | 68 | 53 | 12.0 | 17.0 | 300 < |

As is clear from Table 3, the water-soluble papers obtained in Examples 5 to 7, as well as the water-decomposable papers obtained in Examples 8 to 10, had the function of water solubility or water-decomposability, and the function of heat-sensitive adhesiveness. The papers had such stiffness as is required in connection with bag making, and the papers involved almost no trouble when made into bags.

In contrast to this, the water-decomposable paper obtained in Comparative Example 3, wherein the hot pressing temperature was set at 200°C, or 50 °C higher than 150°C which is the melting point of the sprayed resin, had heat-sensitive adhesiveness, but there was considerable drop in water-decomposability, with the result that the paper was not decomposed in water at 20 °C in short time.

## Claims

1. A thermo-adhesive, water-soluble or water-decomposable paper characterized in that:
one side of the paper has heat-sensitive adhesiveness in a portion thereof or all over of more than 4,8 N but less than 15,0 N; and when the paper of 2 x 2 cm in size is placed in 200 ml of 20°C water contained in a 300 ml vessel while said water being stirred with a magnetic stirrer of 250 rpm, it takes not less than 40 and not more than 58 seconds until said paper piece gets dissolved or disintegrated into single unit fibers.

2. A method of manufacturing a thermo-adhesive, water-soluble or water-decomposable paper, which comprises:
spraying a water-soluble and thermo-adhesive resin powder having a particle size of 2 mm (10 mesh) or finer onto one side of a water-soluble or water-decomposable paper in the amount of 5 to 50 g/m²; and
subsequently, effecting heat treatment, preferably by hot pressing, at a temperature of not higher than 30°C above the melting point of the resin, thereby fixing the resin powder to the paper.

3. A manufacturing method as set forth in claim 2, wherein hot pressing is carried out at a temperature of or higher than 100°C below the melting point of the resin.

4. A manufacturing method as set forth in claims 2 or 3, wherein the resin powder is polyvinyl alcohol-based resin powder having a polymerization degree of 50 to 500 and a saponification degree of 50 to 90%.

5. A manufacturing method as set forth in any one of claims 2 to 4, wherein the resin powder has a particle size of 0,30 mm to 0,059 mm (50 to 250 mesh).

6. A manufacturing method as set forth in any one of claims 2 to 5, wherein the resin powder is sprayed in the amount of 8 to 20 g/m2.

7. A thermo-adhesive, water-soluble or water-decomposable paper of which one side has heat-sensitive adhesiveness in a portion thereof or all over, the paper in its entirety being soluble in water or disintegratable in water into single fibers, characterized in that said paper is obtainable by the process of claim 2.

## Patentansprüche

1. Wärmeempfindlich klebendes, wasserlösliches oder wasserdispergierbares Papier, d a**durch gekennzeichnet**, daß eine Seite des Papiers in einem Abschnitt oder auf der gesamten Fläche eine wärmeempfindliche Haftfähigkeit von mehr als 4,8 N und weniger als 15,0 N aufweist; wobei mindestens 40 s und höchstens 58 s benötigt werden, um ein Papier von einer Größe von 2 cm x 2 cm in 200 ml Wasser von 20 °C, welches in einem 300 ml Gefäß mit einem Magnetrührer bei 250 Upm gerührt wird, aufzulösen oder in einzelne Fasern zu dispergieren.

2. Verfahren zur Herstellung eines wärmeempfindlich klebenden, wasserlöslichen oder wasserdispergierbaren Papiers, umfassend die Schritte:
Aufsprühen eines wasserlöslichen und wärmeempfindlich klebenden Harzpulvers von einer Partikelgröße von 2 mm (10 mesh) oder geringer, auf eine Seite eines wasserlöslichen oder wasserdispergierbaren Papiers in einer Menge von 5 bis 50 g/m²; und
Fixieren des Harzpulvers auf dem Papier durch eine anschließende Wärmebehandlung, vorzugsweise durch Heißpressen, bei einer Temperatur, die nicht höher als 30 ° über dem Schmelzpunkt des Harzes liegt.

3. Herstellverfahren nach Anspruch 2, **da durch gekennzeichnet**, daß das Heißpressen bei einer Temperatur ausgeführt wird, die höchstens 100 °C unterhalb der Schmelztemperatur des Harzes liegt.

4. Herstellverfahren nach Anspruch 2 oder 3, **dadurch gekennzeichnet,** daß das Harzpulver ein Harzpulver auf Polyvinylalkoholbasis ist, welches einen Polymerisationsgrad von 50 bis 500 und einen Verseifungsgrad von 50 bis 90 % aufweist.

5. Herstellverfahren nach einem der Ansprüche 2 bis 4, **dadurch gekennzeichnet,** daß das Polymerharz eine Partikelgröße von 0,30 mm bis 0,059 mm (50 bis 250 mesh) aufweist.

6. Herstellverfahren nach einem der Ansprüche 2 bis 5, **dadurch gekennzeichnet,** daß das Polymerpulver in einer Menge von 8 bis 20 g/m² aufgesprüht wird.

7. Wärmeempfindlich klebendes, wasserlösliches oder wasserdispergierbares Papier, welches auf einer Seite in einem Abschnitt oder auf der gesamten Fläche eine wärmeempfindliche Haftfähigkeit aufweist, wobei das Papier in seiner Gesamtheit in Wasser löslich oder in Wasser in einzelne Fasern dispergierbar ist, erhältlich durch das Verfahren nach Anspruch 2.

## Revendications

1. Papier thermo-adhésif, soluble dans l'eau ou décomposable dans l'eau,
caractérisé en ce qu'
une face du papier a une force d'adhérence thermo-sensible dans une partie de celui-ci ou sur toute la surface de plus que 4,8 N mais moindre que 15,0 N ; et quand le papier de 2x2 cm en taille est placé dans 200 ml d'eau à 20°C, contenus dans un récipient de 300 ml alors que cette eau est en train d'être agitée avec un agitateur magnétique de 250 t/min, cela ne prend pas moins de 40 et pas plus de 58 secondes jusqu'à ce que ledit papier vienne à se dissoudre ou à être désintégré en fibres unitaires uniques.

2. Procédé de fabrication d'un papier thermo-adhésif, soluble dans l'eau ou décomposable dans l'eau qui comprend :
- la pulvérisation d'une résine en poudre soluble dans l'eau et thermo-adhésive ayant une taille de particules de 2 mm (tamis 10) ou plus fine sur une face d'un papier soluble dans l'eau ou décomposable dans l'eau en quantité allant de 5 à 50 g/m² et,
- subséquemment le fait d'effectuer un traitement thermique, de préférence par pressage à chaud à une température de moins que 30°C au-dessus du point de fusion de la résine, de cette façon fixant la poudre de résine au papier.

3. Procédé de fabrication comme décrit à la revendication 2,
dans lequel
la pression à chaud est effectuée à une température de ou au dessus de 100°C en dessous du point de fusion de la résine.

4. Procédé de fabrication comme décrit dans la revendication 2 ou la revendication 3,
dans lequel
la résine en poudre est une résine en poudre basée sur l'alcool polyvinylique ayant un degré de polymérisation de 50 à 500 et un degré de saponification de 50 à 90 %.

5. Procédé de fabrication comme décrit dans chacune des revendications 2 à 4,
dans lequel
la résine en poudre a une taille de particules allant de 0,30 mm à 0,059 mm (tamis 50 à 250).

6. Procédé de fabrication comme décrit dans chacune des revendications 2 à 5,
dans lequel
la résine en poudre est pulvérisée en quantité allant de 8 à 20 g/m².

7. Papier thermo-adhésif, soluble dans l'eau ou décomposable dans l'eau dont une face a une force d'adhérence thermo-sensible sur un fragment de celle-ci ou sur toute la surface, le papier dans son intégralité étant soluble dans l'eau en étant désintégrable dans l'eau en fibres unique,
caractérisé en ce que
ledit papier peut être obtenu par le procédé de la revendication 2.
